# EUROPEAN PATENT SPECIFICATION

(11) **EP 0 340 739 B1**
(45) Date of publication and mention of the grant of the patent: **15.11.1995**
(21) Application number: 89107957.6
(22) Date of filing: 02.05.1989
(51) Int. Cl.: C08G 65/00

(54) **Process for preparing perfluoropolyethers of controlled molecular weight having perfluoroalkyl or perfluorochloralkyl end groups**
Verfahren zur Herstellung von Perfluoropolyethern von kontrollierbarem Molekulargewicht, welche Perfluoralkyl- oder Perfluorchloralky-Endgruppen enthalten
Procédé pour la préparation de perfluoropolyéthers de poids moléculaire controlé contenant des groupements terminaux perfluoroalkyle ou perfluorochloroalkyle

(30) Priority: 02.05.1988 IT 2040788
(43) Date of publication of application: 08.11.1989
(73) Proprietor: AUSIMONT S.p.A., I-20100 Milano (IT)
(72) Inventor: Marchionni, Giuseppe, Dr., I-20133 Milan (IT); Staccione, Anna, Dr., I-20144 Milan (IT)
(74) Representative: Barz, Peter, Dr.

(56) References cited:
- EP-A- 0 151 877
- EP-A- 0 193 028
- EP-A- 0 193 122
- EP-A- 0 223 238
- DE-A- 3 739 447

## Description

The present invention relates to the preparation of neutral perfluoropolyethers having perfluoroalkyl end groups wherein one or two fluorine atoms are optionally replaced by chlorine atoms.

It is known to prepare perfluoropolyethers having (neutral) perfluoroalkyl end groups via photooxidation of fluoroolefins and subsequent fluorination with gaseous fluorine in the presence or absence of ultraviolet radiation, thereby effecting the elimination of the peroxide groups and the conversion of the acid end groups to perfluoroalkyl groups.

By this process, mixtures of products exhibiting different molecular weights and a very broad molecular weight distribution are usually obtained; the proportion of high molecular weight products being generally considerable.

Processes of this type are described in US-A-3,442,942, 3,665,041 and 3,683,027 and in EP-A-193,028.

However, for many industrial applications it is necessary to have available products of a considerably lower molecular weight and a higher homogenity. Thus, it is generally necessary to employ methods for reducing the molecular weight, based on the thermal catalytic fractionation of the product in the presence of suitable catalysts, as disclosed in, e.g., EP-A-167,258 and 223,238.

This process is very important from an industrial point of view, because it allows to utilize all of the photooxidation products which generally have a high average molecular weight and cannot be directly used as such in a useful manner.

On the other hand, the separation of products having a (desired) relatively low average molecular weight from the crude photosynthesis reaction product is very complicated and difficult to carry out on an industrial scale. Furthermore, the yield of useful products of low molecular weight is generally very low (about 10% - 20%).

Thus, there is a need to have available an alternative industrial process capable of affording high yields of products having molecular weights in the desired range, directly in the photooxidation process, without making necessary any subsequent step for molecular weight regulation.

Thus, the present invention relates to a process for preparing perfluoropolyethers of general formula: 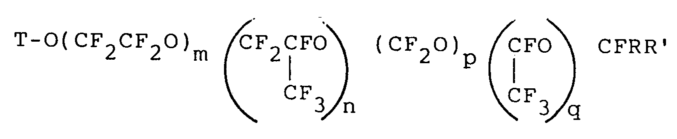
wherein:
T is a (straight chain or branched) perfluoroalkyl group (preferably having 1 to 3 carbon atoms) wherein a fluorine atom may optionally be replaced by a chlorine atom, in particular CF₂Y-, CF₂YCF₂-, YCF₂CF(CF₃)-, YCF(CF₃)CF₂-, Y representing fluorine or chlorine;
R and R', the same or different from each other, are fluorine or chlorine;
m and n are numbers ranging from 0 to 20, extremes included, p ranges from 0 to 40, extremes included, and q ranges from 0 to 10, extremes included, the following conditions being additionally met:
when m = 0, n ranges from 1 to 20 and (p+q)/n is from 0.01 to 0.5 (extremes included);
when n = 0, also q = 0, m ranges from 1 to 20 and p/m is from 0.5 to 2 (extremes included);
when n and m are both different from 0, (m+n) ranges from 1 to 20 and (p+q)/(m+n) is from 0.01 to 0.05 (extremes included). The above units in brackets are distributed statistically along the chain and m, n, p and q represent average values for the number of the corresponding units present in the chain.
The process for preparing the above products comprises the following essential steps:
a) Photooxidation of perfluoropropene and/or tetrafluoroethylene with gaseous O₂ in a liquid reaction phase initially consisting of C₃F₆ and/or, optionally, of a chlorofluorocarbon solvent, in the presence of a perhalogenated ethylene containing 1 to 4, preferably 1 or 2, atoms selected from Cl, Br and I, by irradiating said liquid reaction mixture, maintained at a temperature of from -20°C to -100°C, preferably from -50°C to -60°C, with ultraviolet light (wavelength preferably from 200 to 600 nm). The perhalogenated ethylene is introduced into the reaction mixture sumultaneously with the O₂ flow. in an amount up to 50% by moles, and generally not exceeding 20% by moles, with respect to the perfluoroolefins (C₃F₆ and/or C₂F₄).
   As perhalogenated ethylenes CF₂ = CFCl, CFCl = CFCl, CF₂ = CCl₂ CF₂ = CFBr are preferably used.
b) Fluorination of the crude product obtained in step a) with gaseous fluorine, said fluorination being conducted thermally at a temperature ranging from 100° to 250°C or in the presence of ultraviolet radiation at a temperature of from 0° to 120°C.
This process is carried out according to a known technique (see US-A-3,665,041 and 4,664,766). In the course of the fluorination treatment, in addition to the conversion of the acid end groups to neutral perfluoroalkyl groups also the substitution of all of the bromine and iodine atoms, if present in the photooxidation product, takes place. The substitution of chlorine atoms occurs only to a very limited extent. Furthermore, the decomposition of the peroxide groups contained in the crude photooxidation product also takes place.

The process of the invention allows to obtain high yields of completely fluorinated products or of products containing chlorine, but only in the end groups. Said products have proved to possess high thermal and chemical stabilities and to be fully comparable, as regards the practical applications, to known perfluoropolyethers with perfluoroalkyl end groups. Thus, they may be utilized in the field of the testing for electronic parts, such as the gross leak test, the burn test and the thermal shock test (see EP-A-203,348).

Another possible field of application of said products is the formulation of lubricating greases (see US-A-4,472,290).

The following examples merely illustrate the present invention and are not to be construed as a limitation of the scope thereof.

### EXAMPLE 1

### A) Photooxidation of C₃F₆ + CFCl = CF₂

Into a cylindrical glass reactor (volume = 1000 ml; optical path = 2 ml), equipped with an inner coaxial quartz sheath, a dipping pipe for the introduction of gases, a sheath with a thermocouple for measuring the internal temperature, and with a reflux condenser maintained at a temperature of -80°C there were introduced 1600 g of C₃F₆ at a temperature of -60°C. Through the dipping pipe, a gaseous mixture of 27 l/h of O₂ and 3 l/h of C₂F₃Cl was bubbled into the reactor. By means of a cooling bath placed around the reactor the temperature of the reacting liquid phase was maintained at -60°C for the whole duration of the test.
After having introduced into the quartz sheath an ultravioletray lamp type HANAU® TQ 150 (47 W, wavelength from 200 to 300 nm), the lamp was turned on, and irradiation and feeding of the reacting gases were continued for 5 hours.
After a five-hour irradiation, the lamp was turned off, the reaction mixture was degassed and the unreacted C₃F₆ was recovered from the reactor by evaporation at room temperature. Thus an oily polymeric residue was obtained. The yield of product was 1041 g. Said residue was subjected to iodometric analysis in order to determine the active (peroxide) oxygen content (which was 0.32% by weight) as well as to ¹⁹F-NMR analysis, which revealed that the residue was composed of polyether chains of the type: 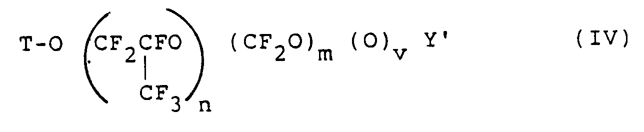 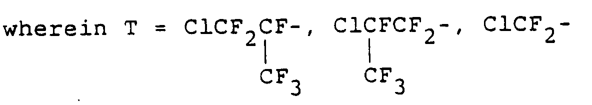
with a pronounced predominance of the first two types of end groups; 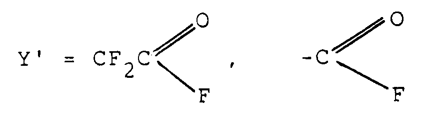
the latter group being present in an amount of <5% of the total of the end groups Y′.
The m/n ratio was very low (<0.05).
The product viscosity, determined at 20°C by means of an Ostwald-Fenske viscosimeter, was 5.7.
The infrared spectrum exhibited bands at 1884 cm⁻¹ which are typical for groups of formula 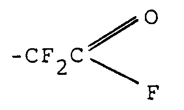
The mass spectrometric analysis confirmed both the presence of the end groups determined by NMR analysis, and the absence of units -CFCl CF₂O- in the chain. According to the NMR analysis, the product exhibited a m/n ratio of 0.01 and a molecular weight of 960.
The chlorine analysis indicated a chlorine content of 4.2% by weight.
Assuming that the product contained only one chlorine atom per chain, as indicated in the above formula, the average molecular weight was calculated to be 840.
The product was hydrolyzed by means of a water-saturated nitrogen flow. After hydrolysis, the product exhibited a viscosity of 31 cSt at 20°C. The hydrolized product was then distilled under vacuum (20 to 1 mm Hg) at a maximum temperature in the boiler of 210°C.
Three fractions were obtained (see Table 1 below).

**TABLE 1**

| | g | M.W. | Viscosity (cSt) |
|---|---|---|---|
| Fraction I | 130.6 | 400 | 4.8 |
| Fraction II | 238.2 | 600 | 7.9 |
| Fraction III | 552.3 | 1300 | 112 |

The ¹⁹F-NMR analysis carried out on the three samples confirmed the structure: 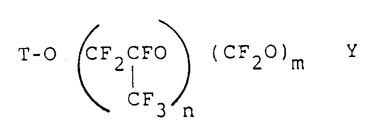 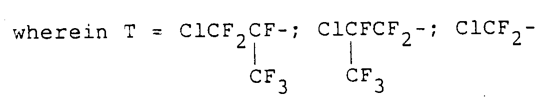
with a significant prevalence of the first two types;
Y = -CF₂COOH,
and allowed the calculation of the average molecular weights (M.W.) listed in Table 1.

### B) Fluorination

A photochemical reactor (volume = 100 ml) equipped with a quartz sheath for housing a mercury-vapour lamp type HANAU® TQ 150 and also equipped with a bubbler, a magnetic stirrer, a CO₂ trap and a thermoregulation system for both the reactor and the sheath system, utilizing FC 70® and GALDEN DOZ® , was charged with 210.2 g of acid perfluoropolyether having a viscosity of 112.4 cSt, obtained as described in example 1 (fraction III). After the lamp had been switched on, fluorination was carried out with a fluorine flow of 3 l/h, thermoregulating the apparatus at 90°C.
After 6 hours, the product was completely neutral.
The ¹⁹F-NMR analysis of a sample confirmed the structure: 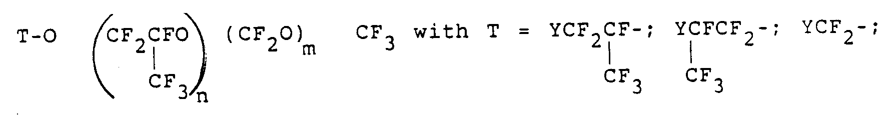
where Y is F or Cl,
the ratio of end groups Y = Cl to completely perfluorinated end groups being 0.96.
By continuing the fluorination for another 20 hours, this ratio was brought to 0.53 and the resulting product (189 g) exhibited a viscosity of 19 cSt.
The photochemical fluorination conducted on the sample obtained in example 1, fraction II, under the same conditions as described above but at a temperature of 10°C, after 10 hours afforded a completely neutral product having a viscosity at 20°C of 1.5 cSt, in a yield of 86%.

### EXAMPLE 2

### A) Photooxidation of C₂F₄ + CFCl = CF₂

Into a cylindrical glass reactor (diameter = 80 mm, volume = about 600 ml) equipped with a coaxial inner quartz sheath (diameter 20 mm) and furthermore equipped with a dipping tube for the introducion of gases and a reflux condenser maintained at a temperature of -80°C, 600 ml of A-12 (CF₂Cl₂) were introduced. Through the dipping tube, a gaseous mixture of oxygen, C₂F₄ and ClC₂F₃ was bubbled into the reactor. By means of a cooling bath placed around the reactor the reacting liquid phase was maintained at the temperature indicated in Table 2 for the whole duration of the test. After having introduced into the quartz sheath an ultraviolet-ray lamp type HANAU® TQ 150 (47 W, wavelength ranging from 200 to 300 nm), the lamp was switched on, and irradiation and feeding of the reagents was continued for 5 hours.
The gases leaving the reactor were eliminated after having undergone an alkaline washing. After a five-hour irradiation, the lamp was switched off and the solvent was removed from the reactor by evaporation at room temperature. Thus an oily polymeric residue was obtained. This residue was subjected to iodometric analysis in order to determine the active oxygen content, and to ¹⁹F-NMR analysis which revealed that the residue was composed of polyether chains of the type:

T′-O(CF₂CF₂O)ₙ(CF₂O)ₘ(O)ᵥY′ (V)

with T′ = ClCF₂CF₂-; ClCF₂-;
Y′ = -CF₂COF; -COF.
The m/n ratio depended on the reaction conditions (temperature) and ranged from 0.5 to 2.
The product viscosity was determined at 20°C by means of an Ostwald-Fenske viscosimeter.
Reaction conditions and characteristics of the oils produced are reported in Table 2.

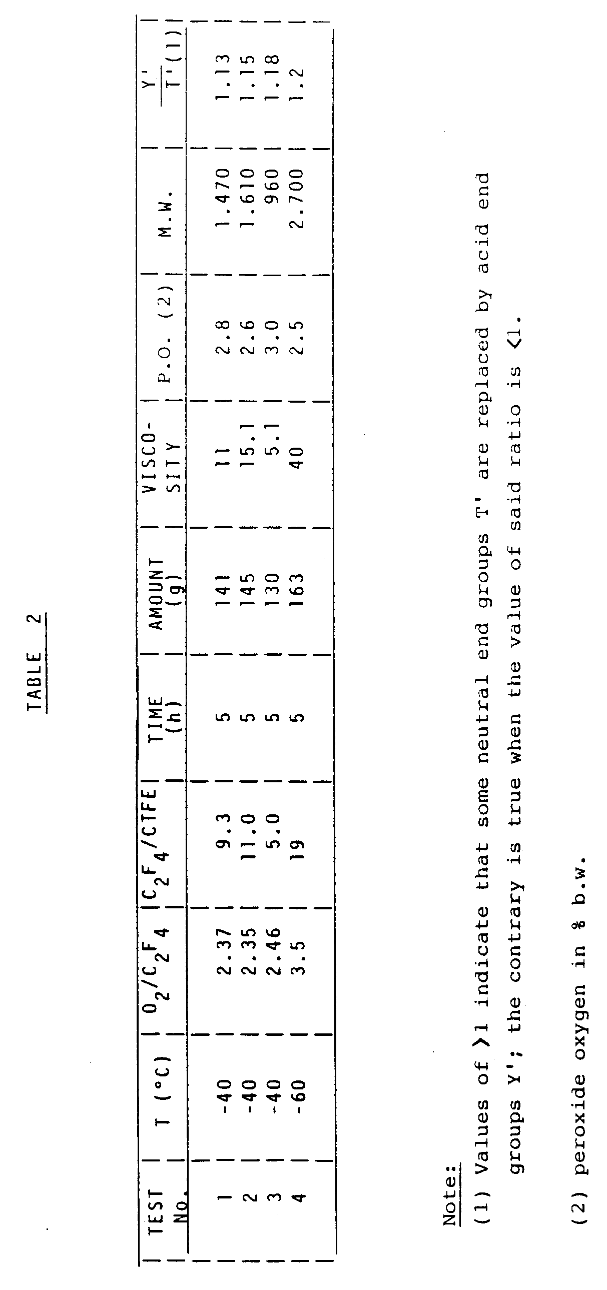

### B) Fluorination

Utilizing a photochemical reactor like the one described in example 1 B) and following the same procedure, but employing a temperature of 60°C, a fluorination was effected on the product obtained according to example 2 A) (test No.4, table 2), after having subjected the peroxide groups to hydrolysis and thermal treatment (yield: 78%). After a 12-hour fluorination, the recovered product (yield = 93%) exhibited a viscosity of 7 cSt at 20°C, and the ¹⁹F-NMR analysis revealed that the polyether had the structure:
T-O(CF₂CF₂O)ₙ(CF₂O)ₘ CF₃ with T = YCF₂CF₂- ; YCF₂- and Y = Cl or F.

### EXAMPLE 3

### A) Photooxidation of C₃F₆, with CFBr = CF₂

In a photochemical reactor like the one described in example 1, charged with 800 g of C₃F₆, a photochemical reaction was carried out at a temperature of -64°C: through a dipping pipe, oxygen and BrC₂F₃ in a ratio of 2.4/l and at a total flow of 32 l/h were separately bubbled into the reactor, after dilution with helium. After a 5-hour irradiation, the lamp was switched off and unreacted C₃F₆ was recovered. 43.1 g of an oily product were obtained.
The iodometric analysis indicated an active oxygen content of 0.43% by weight.
The product exhibited a viscosity of 6.95 cSt and the ¹⁹F-NMR analysis indicated that the polyether consisted of perfluoropolyether chains of the type 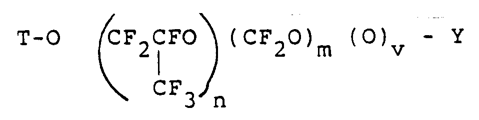 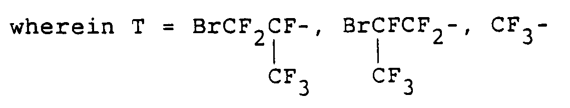
with a pronounced predominance of the first two types of end groups;
Y = -CF₂COF, -COF
with a significant predominance of the first type of end groups, having an average molecular weight of about 800 and a m/n ratio of 0.05.
The T/Y ratio equaled 1.
The bromine analysis indicated a value of 8.9%.
Assuming that the product contained only one bromine atom per molecule, a molecular weight of 898 was calculated.

### B) Fluorination

In the apparatus also employed in example 1 B), a fluorination reaction was conducted, at a temperature of 5°C, with a mixture of 20 g of the product obtained in example 3 A) and of 70 g of FC 70 [N(C₅F₁₁)₃] (perfluorotripentylamine) utilized as solvent.
After a 19-hour introduction of fluorine (1 l/h) there were discharged from the reactor 85.2 g of a mixture from which, by distillation, 15 g of perfluoropolyether were separated; ¹⁹F-NMR analysis showed said perfluoropolyether to be composed of structures of the type: 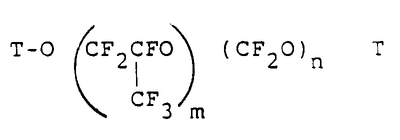
which no longer contained peroxide groups,

wherein:

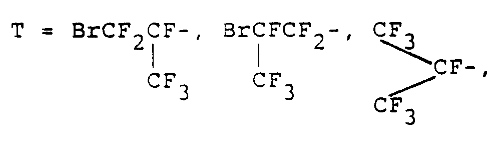

CF₃CF₂CF₂-, CF₃-the ratio of neutral perfluorinated end groups and neutral bromine-containing end groups equaling 3, however.
The resulting product was subject to fluorination once again, using the same reactor but conducting the reaction at 50°C (with a fluorine flow of 3 l/h). After a 40-hour reaction, there were discharged 88 g of a mixture, from which 11 g of perfluoropolyether were isolated; according to ¹⁹F-NMR analysis, said perfluoropolyether consisted of structures of the type: 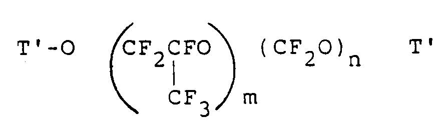
with T′ = -CF(CF₃)₂, -CF₂CF₂CF₃, -CF₃
and had an average molecular weight of 650.
In this experiment a trap cooled to -80°C was placed at the reactor outlet in order to collect the by-products formed in the reaction. Said by-products exhibited a yellow colour, due to the presence of BrF and complexes thereof.

## Claims (Claims for the following Contracting State(s): BE, CH, DE, FR, GB, LI, NL, SE)

1. Process for preparing perfluoropolyethers having perfluoroalkyl or perfluorochloroalkyl end groups of general formula: 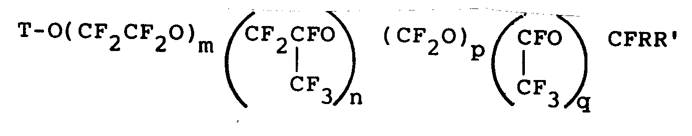 wherein:
T is a perhaloalkyl group which may contain a chlorine atom, particularly CF₂Y-, CF₂YCF₂-, YCF₂CF(CF₃)-, YCF(CF₃)CF₂-, Y representing fluorine or chlorine;
R and R', the same or different from each other, are fluorine or chlorine;
m and n are numbers ranging from 0 to 20, p ranges from 0 to 40, and q ranges from 0 to 10, the following conditions being additionally met:
when m = 0, n ranges from 1 to 20 and (p+q)/n is from 0.01 to 0.5;
when n = 0, also q = 0 and m ranges from 1 to 20 and p/m is from 0.5 to 2;
when n and m are both different from 0, (m+n) ranges from 1 to 20 and (p+q)/(m+n) is from 0.01 to 0.05;
said process comprising the following steps:
a) photooxidation of perfluoropropene and/or tetrafluoroethylene with gaseous O₂ in a liquid reaction phase, optionally using a chlorofluorocarbon as solvent, by irradiating the reaction mixture, maintained at a temperature of, from -20° to -100°C, in the presence of a perhalogenated ethylene containing 1 to 4, and preferably one or two atoms selected from Cl, Br and I, said perhalogenated ethylene being fed to the reaction mixture in an amount up to 50% by moles with respect to the perfluoroolefin, with ultraviolet light;
b) fluorination with gaseous fluorine, effected at a temperature from 100° to 250°C or from 0° to 120°C in the presence of ultraviolet radiation.

2. Perfluoropolyethers of general formula: 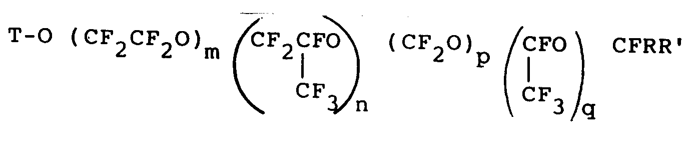 wherein:
T is a perhaloalkyl group containing a Cl atom, in particular CF₂Cl-, CF₂ClCF₂-, ClCF₂CF(CF₃)-, 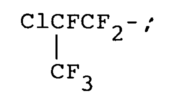 R and R', the same or different from each other, are flourine or chlorine; m and n are numbers ranging from 0 to 20, p ranges from 0 to 40, and q ranges from 0 to 10, the following conditions being additionally met:
when m = 0, n ranges from 1 to 20 and (p+q)/n is from 0.01 to 0.5;
when n = 0, also q = 0 and m ranges from 1 to 20 and p/m is from 0.5 to 2;
when n and m are both different from 0, (m+n) ranges from 1 to 20 and (p+q)/(m+n) is from 0.01 to 0.05.

## Claims (Claims for the following Contracting State(s): ES)

1. Process for preparing perfluoropolyethers having perfluoroalkyl or perfluorochloroalkyl end groups of general formula: 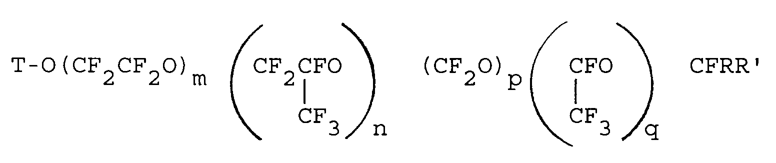 wherein:
T is a perhaloalkyl group which may contain a chlorine atom, particularly CF₂Y-, CF₂YCF₂-, YCF₂CF(CF₃)-, YCF(CF₃)CF₂-, Y representing fluorine or chlorine;
R and R', the same or different from each other, are fluorine or chlorine;
m and n are numbers ranging from 0 to 20, p ranges from 0 to 40, and q ranges from 0 to 10, the following conditions being additionally met:
when m = 0, n ranges from 1 to 20 and (p+q)/n is from 0.01 to 0.5;
when n = 0, also q = 0 and m ranges from 1 to 20 and p/m is from 0.5 to 2;
when n and m are both different from 0, (m+n) ranges from 1 to 20 and (p+q)/(m+n) is from 0.01 to 0.05;
said process comprising the following steps:
a) photooxidation of perfluoropropene and/or tetrafluoroethylene with gaseous O₂ in a liquid reaction phase, optionally using a chlorofluorocarbon as solvent, by irradiating the reaction mixture, maintained at a temperature of from -20°C to -100°C, in the presence of a perhalogenated ethylene containing 1 to 4, and preferably one or two atoms selected from Cl, Br and I, said perhalogenated ethylene being fed to the reaction mixture in an amount up to 50% by moles with respect to the perfluoroolefin, with ultraviolet light;
b) fluorination with gaseous fluorine, effected at a temperature from 100° to 250°C or from 0° to 120°C in the presence of ultraviolet radiation.

## Patentansprüche (Patentansprüche für folgende(n) Vertragsstaat(en): BE, CH, DE, FR, GB, LI, NL, SE)

1. Verfahren zur Herstellung von Perfluorpolyethern mit Perfluoralkyl- oder Perfluorchloralkyl-Endgruppen der allgemeinen Formel: 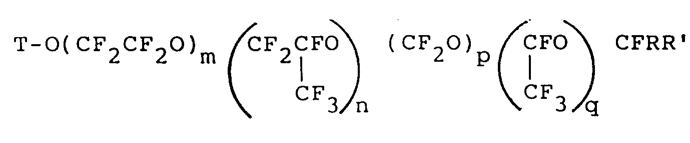 worin:
T eine Perhalogenalkyl-Gruppe darstellt, die ein Chloratom enthalten kann, insbesondere CF₂Y-, CF₂YCF₂-, YCF₂CF(CF₃)-, YCF(CF₃)CF₂-, wobei Y für Fluor oder Chlor steht;
R und R', gleich oder verschieden voneinander, Fluor oder Chlor bedeuten;
m und n Zahlen im Bereich von 0 bis 20 sind, p im Bereich von 0 bis 40 liegt und q im Bereich von 0 bis 10 liegt, wobei die folgenden Bedingungen zusätzlich erfüllt sind: wenn m = 0, liegt n im Bereich von 1 bis 20 und (p+q)/n liegt im Bereich von 0,01 bis 0,5;
wenn n = 0, ebenfalls q = 0 und m liegt im Bereich von 1 bis 20 und p/m beträgt 0,5 bis 2;
wenn n und m beide von 0 verschieden sind, liegt (m+n) im Bereich von 1 bis 20 und (p+q)/(m+n) beträgt 0,01 bis 0,05;
wobei das Verfahren die folgenden Stufen umfaßt:
a) Photooxidation von Perfluorpropen und/oder Tetrafluorethylen mit gasförmigem O₂ in einer flüssigen Reaktionsphase, gegebenenfalls unter Verwendung eines Chlorfluorkohlenstoffs als Lösungsmittel, durch Bestrahlung der Reaktionsmischung, die bei einer Temperatur von -20 bis -100°C gehalten wird, in Anwesenheit eines perhalogenierten Ethylens, das 1 bis 4 und vorzugsweise ein oder zwei aus Cl, Br und I ausgewählte Atome enthält, wobei das perhalogenierte Ethylen der Reaktionsmischung in einer Menge von bis zu 50 Mol-%, bezogen auf das Perfluorolefin, zugeführt wird, mit ultraviolettem Licht;
b) Fluorierung mit gasförmigem Fluor, bewirkt bei einer Temperatur von 100 bis 250°C oder von 0 bis 120°C in Anwesenheit von UV-Strahlung.

2. Perfluorpolyether der allgemeinen Formel: 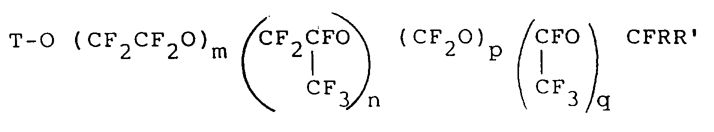 worin:
T eine Perhalogenalkyl-Gruppe darstellt, die ein Chloratom enthält, insbesondere CF₂Cl-, CF₂ClCF₂-, ClCF₂CF(CF₃)-, ClCF(CF₃)CF₂-;
R und R', gleich oder verschieden voneinander, Fluor oder Chlor bedeuten;
m und n Zahlen im Bereich von 0 bis 20 sind, p im Bereich von 0 bis 40 liegt und q im Bereich von 0 bis 10 liegt, wobei die folgenden Bedingungen zusätzlich erfüllt sind: wenn m = 0, liegt n im Bereich von 1 bis 20 und (p+q)/n liegt im Bereich von 0,01 bis 0,5;
wenn n = 0, ebenfalls q = 0 und m liegt im Bereich von 1 bis 20 und p/m beträgt 0,5 bis 2;
wenn n und m beide von 0 verschieden sind, liegt (m+n) im Bereich von 1 bis 20 und (p+q)/(m+n) beträgt 0,01 bis 0,05.

## Patentansprüche (Patentansprüche für folgende(n) Vertragsstaat(en): ES)

1. Verfahren zur Herstellung von Perfluorpolyethern mit Perfluoralkyl- oder Perfluorchloralkyl-Endgruppen der allgemeinen Formel: 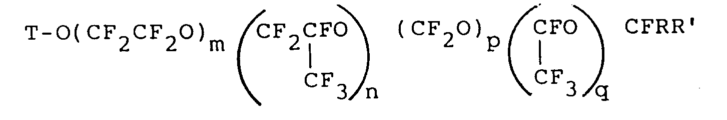 worin:
T eine Perhalogenalkyl-Gruppe darstellt, die ein Chloratom enthalten kann, insbesondere CF₂Y-, CF₂YCF₂-, YCF₂CF(CF₃)-, YCF(CF₃)CF₂-, wobei Y für Fluor oder Chlor steht;
R und R', gleich oder verschieden voneinander, Fluor oder Chlor bedeuten;
m und n Zahlen im Bereich von 0 bis 20 sind, p im Bereich von 0 bis 40 liegt und q im Bereich von 0 bis 10 liegt, wobei die folgenden Bedingungen zusätzlich erfüllt sind: wenn m = 0, liegt n im Bereich von 1 bis 20 und (p+q)/n liegt im Bereich von 0,01 bis 0,5;
wenn n = 0, ebenfalls q = 0 und m liegt im Bereich von 1 bis 20 und p/m beträgt 0,5 bis 2;
wenn n und m beide von 0 verschieden sind, liegt (m+n) im Bereich von 1 bis 20 und (p+q)/(m+n) beträgt 0,01 bis 0,05;
wobei das Verfahren die folgenden Stufen umfaßt:
a) Photooxidation von Perfluorpropen und/oder Tetrafluorethylen mit gasförmigem O₂ in einer flüssigen Reaktionsphase, gegebenenfalls unter Verwendung eines Chlorfluorkohlenstoffs als Lösungsmittel, durch Bestrahlung der Reaktionsmischung, die bei einer Temperatur von -20 bis -100°C gehalten wird, in Anwesenheit eines perhalogenierten Ethylens, das 1 bis 4 und vorzugsweise ein oder zwei aus Cl, Br und I ausgewählte Atome enthält, wobei das perhalogenierte Ethylen der Reaktionsmischung in einer Menge von bis zu 50 Mol-%, bezogen auf das Perfluorolefin, zugeführt wird, mit ultraviolettem Licht;
b) Fluorierung mit gasförmigem Fluor, bewirkt bei einer Temperatur von 100 bis 250°C oder von 0 bis 120°C in Anwesenheit von UV-Strahlung.

## Revendications (Revendications pour l'(les) Etat(s) contractant(s) suivant(s): BE, CH, DE, FR, GB, LI, NL, SE)

1. Procédé de préparation de perfluoropolyéthers ayant des groupes terminaux perfluoroalkyle ou perfluorochloroalkyle de formule générale : 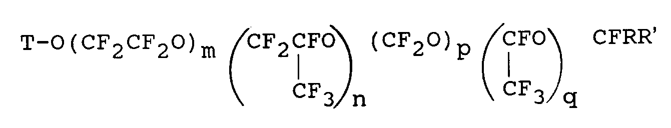 dans laquelle :
- T représente un groupe perhaloalkyle qui peut contenir un atome de chlore, en particulier CF₂Y-, CF₂YCF₂-, YCF₂CF(CF₃)-, YCF(CF₃)CF₂-, Y représentant fluor ou chlore ;
- R et R', identiques ou différents l'un de l'autre, représentent fluor ou chlore ;
- m et n sont des nombres se situant dans une plage allant de 0 à 20 ;
- p se situe dans une plage allant de 0 à 40 ; et
- q se situe dans une plage allant de 0 à 10 ;
les conditions suivantes étant additionnellement satisfaites :
- lorsque m = 0, n se situe dans une plage allant de 1 à 20 et (p+q)/n est de 0,01 à 0,5 ;
- lorsque n = 0, également q = 0 et m se situe dans une plage allant de 1 à 20 et p/m est de 0,5 à 2 ;
- lorsque n et m sont tous les deux différents de 0, (m+n) se situe dans une plage allant de 1 à 20 et (p+q)/(m+n) est de 0,01 à 0,05 ;
ledit procédé comprenant les étapes suivantes :
(a) la photo-oxydation de perfluoropropène et/ou de tétrafluoroéthylène avec O₂ gazeux dans une phase réactionnelle liquide, facultativement à l'aide d'un chlorofluorocarbure en tant que solvant, par irradiation, par de la lumière ultraviolette, du mélange réactionnel, maintenu à une température de -20° à -100°C, en présence d'un éthylène perhalogéné contenant 1 à 4, et de préférence un ou deux atomes choisis parmi Cl, Br et I, ledit éthylène perhalogéné étant introduit dans le mélange réactionnel dans une quantité allant jusqu'à 50% en moles par rapport à la perfluorooléfine ;
(b) la fluoration par du fluor gazeux, effectuée à une température de 100° à 250°C ou de 0° à 120°C en présence de rayonnement ultraviolet.

2. Perfluoropolyéthers de formule générale : 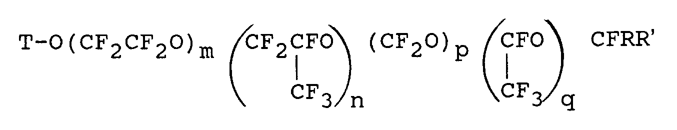 dans laquelle :
- T représente un groupe perhaloalkyle contenant un atome de Cl, en particulier CF₂Cl-, CF₂ClCF₂-, ClCF₂CF(CF₃)-, 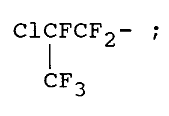
- R et R', identiques ou différents l'un de l'autre, représentent fluor ou chlore ;
- m et n sont des nombres se situant dans une plage allant de 0 à 20 ;
- p se situe dans une plage allant de 0 à 40 ; et
- q se situe dans une plage allant de 0 à 10 ;
les conditions suivantes étant additionnellement satisfaites :
- lorsque m = 0, n se situe dans une plage allant de 1 à 20 et (p+q)/n est de 0,01 à 0,5 ;
- lorsque n = 0, également q = 0 et m se situe dans une plage allant de 1 à 20 et p/m est de 0,5 à 2 ;
- lorsque n et m sont tous les deux différents de 0, (m+n) se situe dans une plage allant de 1 à 20 et (p+q)/(m+n) est de 0,01 à 0,05.

## Revendications (Revendications pour l'(les) Etat(s) contractant(s) suivant(s): ES)

1. Procédé de préparation de perfluoropolyéthers ayant des groupes terminaux perfluoroalkyle ou perfluorochloroalkyle de formule générale : 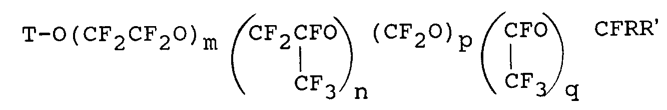 dans laquelle :
- T représente un groupe perhaloalkyle qui peut contenir un atome de chlore, en particulier CF₂Y-, CF₂YCF₂-, YCF₂CF(CF₃)-, YCF(CF₃)CF₂-, Y représentant fluor ou chlore ;
- R et R', identiques ou différents l'un de l'autre, représentent fluor ou chlore ;
- m et n sont des nombres se situant dans une plage allant de 0 à 20 ;
- p se situe dans une plage allant de 0 à 40 ; et
- q se situe dans une plage allant de 0 à 10 ;
les conditions suivantes étant additionnellement satisfaites :
- lorsque m = 0, n se situe dans une plage allant de 1 à 20 et (p+q)/n est de 0,01 à 0,5 ;
- lorsque n = 0, également q = 0 et m se situe dans une plage allant de 1 à 20 et p/m est de 0,5 à 2 ;
- lorsque n et m sont tous les deux différents de 0, (m+n) se situe dans une plage allant de 1 à 20 et (p+q)/(m+n) est de 0,01 à 0,05 ;
ledit procédé comprenant les étapes suivantes :
(a) la photo-oxydation de perfluoropropène et/ou de tétrafluoroéthylène avec O₂ gazeux dans une phase réactionnelle liquide, facultativement à l'aide d'un chlorofluorocarbure en tant que solvant, par irradiation, par de la lumière ultraviolette, du mélange réactionnel, maintenu à une température de -20°C à -100°C, en présence d'un éthylène perhalogéné contenant 1 à 4, et de préférence un ou deux atomes choisis parmi Cl, Br et I, ledit éthylène perhalogéné étant introduit dans le mélange réactionnel dans une quantité allant jusqu'à 50% en moles par rapport à la perfluorooléfine ;
(b) la fluoration par du fluor gazeux, effectuée à une température de 100° à 250°C ou de 0° à 120°C en présence de rayonnement ultraviolet.
